# EUROPÄISCHE PATENTSCHRIFT

(11) **EP 1 085 312 B1**
(45) Veröffentlichungstag und Bekanntmachung des Hinweises auf die Patenterteilung: **09.02.2005**
(21) Anmeldenummer: 00890270.2
(22) Anmeldetag: 05.09.2000
(51) Int. Cl.: G01M 17/007

(54) **Verfahren zur Analyse des Fahrverhaltens von Kraftfahrzeugen**
Method for analyzing the driving characteristics of motor vehicles
Méthode d'analyse de la tenue de route de véhicules à moteur

(30) Priorität: 13.09.1999 AT 62199 U
(43) Veröffentlichungstag der Anmeldung: 21.03.2001
(73) Patentinhaber: AVL List GmbH, 8020 Graz (AT)
(72) Erfinder: Schöggl, Peter, Dipl.-Ing. Dr., 8054 Seiersberg (AT); List, Helmut, Dipl.-Ing. Prof., 8010 Graz (AT)
(74) Vertreter: Babeluk, Michael, Dipl.-Ing.

(56) Entgegenhaltungen:
- EP-A- 0 846 945
- US-A- 4 969 212
- US-A- 5 396 792

## Beschreibung

Die vorliegende Erfindung betrifft ein Verfahren zur Analyse des Fahrverhaltens von Kraftfahrzeugen auf einem Rollenprüfstand.

Zielgrößen bei der Entwicklung und Optimierung des Antriebssystems von Kraftfahrzeugen sind Emissionsverhalten, Verbrauch, Leistung und die Fahrbarkeit bzw. Driveability. Allgemein wird unter Driveability eine subjektive Empfindung von Fahrern verstanden, die besonders mit dem Verhalten des Fahrzeugs in transienten Betriebszuständen zusammenhängt. Bei einem schnellen Niederdrücken des Gaspedals eines Fahrzeugs wird es als angenehm empfunden, wenn die Beschleunigung schnell und ruckfrei einsetzt. Ähnliches gilt für andere transiente Betriebszustände, wie etwa plötzlicher Wechsel in den Schubbetrieb oder die Beendigung des Schubbetriebs. Verzögerungen, Unregelmäßigkeiten oder Schwankungen in den Reaktionen des Fahrzeugs auf vom Fahrer induzierte Änderungen werden von diesem zumeist als störend empfunden. Beispiele dafür sind Ruckelschwingungen, Ansprechverzögerungen, Oszillationen der Drehzahl oder Zugkraftschwankungen. Positiv wird eine gute Gasannahme empfunden sowie eine entsprechende Durchzugskraft oder ein ruhiger und stabiler Leerlauf. Die Fahrbarkeit wird durch das Motormanagement wesentlich beeinflusst, aber auch durch die Aufhängung des Motors und die gesamte Gestaltung des Antriebsstranges. Da man versucht, durch Beeinflussung des Motormanagements niedrige Verbrauchswerte und eine günstige Abgasemission zu erzielen, muss als zusätzliche Zielgröße die Erhaltung oder Steigerung der Fahrbarkeit berücksichtigt werden.

Problematisch ist dabei jedoch, dass die objektive und reproduzierbare Bestimmung der Fahrbarkeit in der Praxis wesentlich schwieriger ist als die Bestimmung des Kraftstoffverbrauchs oder der Schadstoffemissionen. Erschwerend kommt hinzu, dass in frühen Phasen der Kraftfahrzeugentwicklung Versuchsfahrzeuge normalerweise nicht verfügbar sind, weshalb transiente Motormanagementfunktionen am dynamischen Motorprüfstand optimiert werden müssen. Zuverlässige Aussagen über die Fahrbarkeit konnten dabei bisher jedoch nicht erhalten werden.

In der EP 0 846 945 A der Anmelderin sind Verfahren und Vorrichtungen beschrieben, um eine weitestgehend objektive Bestimmung der Fahrbarkeit oder Driveability zu ermöglichen. Dabei wird das Fahrzeug im realen Fahrbetrieb einer Vielzahl von Messungen unterzogen, wobei die Messung der Längsbeschleunigung von besonderer Wichtigkeit ist, da Ruckelschwingungen einen wesentlichen Einfluss auf die Fahrbarkeit haben. In dieser Druckschrift ist auch beschrieben, wie auf einem dynamischen Prüfstand eine Vorhersage über die Driveability getroffen werden kann, wenn ein genaues Simulationsmodell des Fahrzeugs vorliegt, das insbesonders den Antriebsstrang detailliert abbildet. Die Erstellung eines solchen Simulationsmodells ist jedoch aufwendig.

Die Aufzeichnung der Daten zur Bestimmung der Driveability im Fahrbetrieb ist zwar ohne besondere Schwierigkeiten möglich, aber in vielen Fällen ist es wünschenswert, gleichzeitig weitere Messungen durchzuführen, wie etwa Geräuschmessungen oder Abgasmessungen. In manchen Fällen ist das zu untersuchende Fahrzeug auch nicht in einem Zustand, der ohne weiteres einen Fahrbetrieb auf offener Straße ermöglicht. In solchen Fällen ist es wünschenswert, die Fahrbarkeit auf einem Rollenprüfstand untersuchen zu können.

Mit den bekannten Verfahren ist eine Bestimmung der Driveability jedoch nicht möglich, da insbesonders Signale über die Längsbeschleunigung fehlen, die jedoch wesentlich in die Bestimmung der Driveability eingehen. Die Erstellung eines ausreichend genauen Modells des auf dem Rollenprüfstand befindlichen Kraftfahrzeugs ist jedoch sehr schwierig, da auch die Dynamik des Prüfstandes und die Kopplung des Fahrzeugs mit den Rollen zu berücksichtigen ist.

Aufgabe der Erfindung ist es, ein einfaches und zuverlässiges Verfahren zur Bestimmung der Fahrbarkeit eines Kraftfahrzeugs anzugeben, mit dem auf einem Rollenprüfstand gearbeitet werden kann.

Erfindungsgemäß weist das Verfahren folgende Schritten auf:
- Durchführen eines vorbestimmten Betriebszyklus an einem Kraftfahrzeug, das sich auf einem Rollenprüfstand befindet;
- Ermittlung eines ersten Längsbeschleunigungs-Signals aus einem Drehzahl-Signal, das vom Antriebsstrang des Kraftfahrzeugs oder dem Rollenprüfstand abgenommen wird;
- Ermittlung eines zweiten Längsbeschleunigungs-Signals durch einen am Kraftfahrzeug befestigten Beschleunigungs-Sensor;
- Überlagerung des ersten und des zweiten Längsbeschleunigungs-Signals zu einem Summensignal;
- Bestimmung eines die Fahrbarkeit des Kraftfahrzeugs darstellenden Parameters aus dem Summensignal.

Wesentlich an der Erfindung ist, dass das an Prüfstand durch Berechnung ermittelte Summensignal bei der Bestimmung der Driveability in analoger Weise verwendet werden kann wie die im realen Fahrbetrieb ermittelte Längsbeschleunigung. Es können somit die Verfahren verwendet werden, wie sie in der EP 0 846 945 A beschrieben sind, soweit sie die Beobachtung des realen Fahrzeugs betreffen.

Wie bei bekannten Verfahren wird das Fahrzeug einem Testzyklus unterworfen, wobei durch Beobachtung verschiedener Messgrößen Triggerbedingungen erfasst werden, die typischen Fahrsituationen entsprechen. Durch Analyse der Messwerte während des Auftretens dieser Triggerbedingungen können Parameter bestimmt werden, die Aussagen über die Fahrbarkeit des Fahrzeugs zulassen. In der EP 846 945 A sind solche Verfahren detailliert beschrieben. Durch die vorliegende Erfindung ist es nun möglich, diese Verfahren auch an einem Fahrzeug durchzuführen, das sich auf einem Rollenprüfstand befindet. Dadurch kann einerseits eine Vereinfachung des Testablaufs erreicht werden und andererseits können zusätzliche Messungen, die etwa die Abgasemission oder die Geräuschentwicklung betreffen, mit einfachen Mitteln simultan durchgeführt werden.

Besonders günstig ist es, wenn das erste Längsbeschleunigungs-Signal aus einem Drehzahl-Signal durch Differenzieren abgeleitet wird. Als Drehzahl-Signal kann in diesen Zusammenhang beispielsweise die Motordrehzahl verwendet werden. Unter Berücksichtigung der Getriebeübersetzung im jeweils eingelegten Gang, des Übersetzungsverhältnisses der Antriebsachse und des Abrollumfangs der Reifen kann aus diesem Signal die theoretische Geschwindigkeit des Fahrzeugs berechnet werden. Alternativ dazu kann die direkt bestimmte Drehzahl eines Rades in einen Geschwindigkeitswert umgerechnet werden, oder es wird dieser Wert aus der Drehzahl der Rollen des Prüfstandes berechnet. Durch die Differenzierung der Geschwindigkeit erhält man die theoretische Längsbeschleunigung. Für die Ermittlung der Fahrbarkeit ist diese Größe jedoch nicht geeignet, da die charakteristischen Ruckelfrequenzen nur stark verfälscht wiedergegeben werden. Erst durch die erfindungsgemäße Überlagerung mit einem an Fahrzeug selbst abgenommenen Längsbeschleunigungs-Signal wird ein brauchbarer Wert erhalten.

Eine Verfälschung durch Artefakte kann insbesonders dadurch minimiert werden, dass das erste Längsbeschleunigungs-Signal einer Tiefpass-Filterung unterzogen wird. Dabei ist eine Grenzfrequenz zwischen 1 und 2 Hz für die meisten Anwendungsfälle passend.

In analoger Weise ist es günstig, wenn das zweite Längsbeschleunigungs-Signal einer Hochpass-Filterung unterzogen wird, wobei die Grenzfrequenz bei 0,5 bis 1,5 Hz liegt. Es ist dabei günstig, wenn die Grenzfrequenz des Hochpass-Filters etwas unter der des Tiefpass-Filters liegt. Diese Filterungen werden aufeinander so angestimmt, dass die Grenzfrequenz der Filter auf einen Wert festgelegt wird, der gewährleistet, dass vom ersten Längsbeschleunigungs-Signal der niederfrequente Anteil so weit genommen wird, als dieser der tatsächlichen Längsbeschleunigung auf der Straße entsprechen würde. Ab dieser Frequenz wird der entsprechend gefilterte Anteil des zweiten Längsbeschleunigungs-Signals genommen, um die höherfrequenten Anteile der Längsbeschleunigung unverzerrt abzubilden. Es hat sich herausgestellt, dass durch ein solches Verfahren ein Summensignal erhalten werden kann, das eine hervorragende Übereinstimmung mit einem realen Längsbeschleunigungs-Signal aufweist.

Eine weitere Verbesserung der Genauigkeit der Übereinstimmung kann dadurch erreicht werden, dass bei der Bildung des Summensignals die Gruppenlaufzeiten im Hochpass-Filter und/oder im Tiefpass-Filter korrigiert werden. Auf diese Weise kann man die relative Phasenlage der einzelnen Frequenzkomponenten in eine Relation bringen, wie sie beim realen Signal vorliegt.

Eine umfassende Beurteilung der Fahrbarkeit kann dadurch erreicht werden, dass zusätzlich zum Summensignal zur Bestimmung eines die Fahrbarkeit des Kraftfahrzeugs darstellenden Parameters mindestens eine zusätzliche Messgröße aus der folgenden Gruppe verwendet wird: Motordrehzahl, Drosselklappen- bzw. Gaspedalstellung, Fahrzeuggeschwindigkeit, Saugrohrunterdruck, Kühlmitteltemperatur, Zündzeitpunkt, Einspritzmenge, Lambda-Wert, Abgasrückführrate und Abgastemperatur. Die Bestimmung eines Wertes für die Fahrzeuggeschwindigkeit erfolgt wie oben beschrieben. Eine Korrektur der höherfrequenten Anteile ist in diesem Fall nicht erforderlich, da diese nicht in die Berechnung der Fahrbarkeit eingehen, wenn man von der Längsbeschleunigung absieht, die gesondert verarbeitet wird.

Eine besonders genaue Aussage über die Fahrbarkeit kann dadurch getroffen werden, dass aus dem Summensignal die Schwingungsamplitude bei charakteristischen Ruckelfrequenzen abgeleitet wird.

Weiters betrifft die Erfindung eine Vorrichtung zur Analyse des Fahrverhaltens von Kraftfahrzeugen auf einem Rollenprüfstand, mit einem ersten Sensor zur Erfassung eines Drehzahl-Signals vom Antriebsstrang des Kraftfahrzeugs oder vom Rollenprüfstand, mit einem Beschleunigungssensor zur Erfassung der Längsbeschleunigung des Kraftfahrzeugs und mit einer Auswertungseinrichtung, die mit dem ersten Sensor und mit dem Beschleunigungssensor verbunden ist und die dazu ausgebildet ist, die Signale der Sensoren weiterzuverarbeiten und zu einem Summensignal zu überlagern, um aus dem Summensignal einen die Fahrbarkeit des Kraftfahrzeugs darstellenden Parameter zu berechnen. Wie oben beschrieben, ist es mit einer solchen Vorrichtung möglich, auf einem Rollenprüfstand genaue Bestimmungen der Fahrbarkeit durchzuführen.

Besonders günstig ist es, wenn der Beschleunigungssensor im Bereich einer Nackenstütze des Kraftfahrzeugs angebracht ist. Es hat sich herausgestellt, dass dadurch eine besonders genaue Übereinstimmung mit den Empfindungen des Fahrers erreichbar ist, insbesonders wenn es sich um die Kopfstütze des Fahrersitzes handelt.

Wie bereits beschrieben ist es vorteilhaft, wenn die Auswertungseinrichtung einen Differenziator und einen Tiefpass-Filter für das erste Längsbeschleunigungs-Signal und/oder einen Hochpass-Filter für das zweite Längsbeschleunigungs-Signal aufweist.

In der Folge wird die Erfindung anhand der in den Figuren dargestellten Ausführungsbeispiele näher erläutert. Es zeigen:
- Fig. 1: die erfindungsgemäße Vorrichtung in einem schematischen Blockschaltbild,
- Fig. 2: ein Diagramm, das die Überlagerung des ersten und des zweiten Längsbeschleunigungs-Signals zeigt.

Mit dem Drehzahlsensor 1 wird die jeweilige Motordrehzahl gemessen. Diese Messung erfolgt in bekannter über einen CAN-Bus, der Sensor kann induktiv oder digital ausgebildet sein. In der Berechnungseinheit 2 wird unter Berücksichtigung der Getriebeübersetzung aus der Motordrehzahl die theoretische Fahrzeuggeschwindigkeit berechnet und durch Differenzieren der Geschwindigkeit die theoretische Beschleunigung abgeleitet. Das Signal aus der Berechnungseinheit 2 wird in einem Tiefpass-Filter 3 umgewandelt, wobei es sich dabei um ein digitales Filter der Ordnung 2 mit einer Grenzfrequenz fg von 1,5 Hz handelt. Die Welligkeit des Filters beträgt 3 dB. In einer Korrektureinheit 4 wird die zeitliche Verschiebung der Einzelwerte um die aus dem Filter resultierende Gruppenlaufzeit korrigiert.

Parallel dazu wird die tatsächliche Längsbeschleunigung durch einen Längsbeschleunigungs-Sensor 5 gemessen, der beispielsweise in der Nackenstütze des Kraftfahrzeugs angeordnet ist. Das Signal des Sensors 5 wird in einem Hochpass-Filter 6 gefiltert, das die Ordnung 2 aufweist und eine Grenzfrequenz fg von 1 Hz besitzt. Die Welligkeit dieses Filters beträgt ebenfalls 3 dB. Auch dieses gefilterte Signal wird in einer Korrektureinheit 7 um die aus dem Filter resultierende Gruppenlaufzeit korrigiert.

In einem Addierwerk 8 werden die Signale aus den Korrektureinheiten 4, 7 addiert und einer Berechnungseinheit 9 für die Driveability zugeführt, die beispielsweise das Ruckeln bewertet.

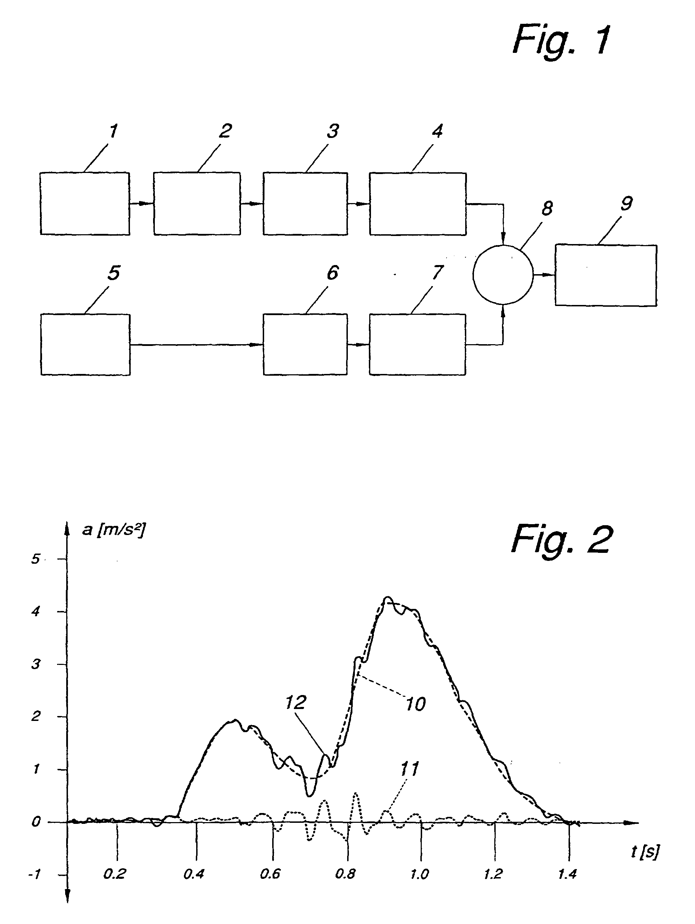

Die Funktionsweise der in dem Blockdiagramm von Fig. 1 erklärten Schaltung wird nun anhand des Diagramms von Fig. 2 erläutert. Dabei werden die entsprechenden Beschleunigungswerte a in einem instationären Fahrzustand über der Zeitachse aufgetragen. Mit 10 ist das erste Längsbeschleunigungs-Signal bezeichnet, das aus der Motordrehzahl abgeleitet ist. Dieses Signal 10 ist mit unterbrochenen Linien dargestellt. Wie aus der Fig. 2 ersichtlich ist, handelt es sich dabei um ein relativ glattes Signal, da aufgrund der Tiefpass-Filterung die hochfrequenten Anteile ausgefiltert sind. Mit 11 ist eine punktierte Linie bezeichnet, die das zweite Längsbeschleunigungs-Signal dargestellt. Das Signal schwankt um die Zeitachse, da das auf dem Rollenprüfstand befindliche Fahrzeug naturgemäß keine länger andauernden Phasen einer Beschleunigung mit gleichem Vorzeichen aufweisen kann. Außerdem ist dieses Signal hochpassgefiltert.

Mit 12 ist in durchgezogenen Linien das Summensignal aus dem ersten Längsbeschleunigungs-Signal 10 und dem zweiten Längsbeschleunigungs-Signal 11 dargestellt. Der globale Verlauf dieses Summensignals 12 folgt naturgemäß dem ersten Längsbeschleunigungs-Signal 10, es werden jedoch auch die hochfrequenten Anteile des zweiten Längsbeschleunigungs-Signals 11 abgebildet.

Es hat sich herausgestellt, dass das Summensignal 12 in hervorragender Weise geeignet ist, als Basis für die Beurteilung der Fahrbarkeit eines Fahrzeugs zu dienen, das auf einem Rollenprüfstand untersucht wird. Das Summensignal 12 entspricht dabei qualitativ weitestgehend der tatsächlichen Längsbeschleunigung, die im Betrieb des Fahrzeugs auf der Straße durch einen Längsbeschleunigungs-Sensor 5 messbar ist. Auf diese Weise können Untersuchungen über die Fahrbarkeit des Fahrzeugs auf einem Rollenprüfstand in vereinfachter Form durchgeführt werden, ohne die Qualität der Ergebnisse zu beeinträchtigen.

## Patentansprüche

1. Verfahren zur Analyse des Fahrverhaltens von Kraftfahrzeugen auf einem Rollenprüfstand, mit folgenden Schritten:
- Durchführen eines vorbestimmten Betriebszyklus an einem Kraftfahrzeug, das sich auf einem Rollenprüfstand befindet;
- Ermittlung eines ersten Längsbeschleunigungs-Signals (10) aus einem Drehzahl-Signal, das vom Antriebsstrang des Kraftfahrzeugs oder dem Rollenprüfstand abgenommen wird;
- Ermittlung eines zweiten Längsbeschleunigungs-Signals (11) durch einen am Kraftfahrzeug befestigten Beschleunigungs-Sensor (5);
- Überlagerung des ersten und des zweiten Längsbeschleunigungs-Signals (10, 11) zu einem Summensignal (12);
- Bestimmung eines die Fahrbarkeit des Kraftfahrzeugs darstellenden Parameters aus dem Summensignal (12).

2. Verfahren nach Anspruch 1, wobei das erste Längsbeschleunigungs-Signal (10) aus einem Drehzahl-Signal durch Differenzieren abgeleitet wird.

3. Verfahren nach einem der Ansprüche 1 oder 2, wobei das erste Längsbeschleunigungs-Signal (10) einer Tiefpass-Filterung unterzogen wird.

4. Verfahren nach einem der Ansprüche 1 bis 3, wobei das zweite Längsbeschleunigungs-Signal (11) einer Hochpass-Filterung unterzogen wird.

5. Verfahren nach einem der Ansprüche 3 oder 4, wobei bei der Bildung des Summensignals (12) die Gruppenlaufzeiten im Hochpass-Filter (6) und/oder im Tiefpass-Filter (3) korrigiert werden.

6. Verfahren nach einem der Ansprüche 1 bis 5, wobei zusätzlich zum Summensignal (12) zur Bestimmung eines die Fahrbarkeit des Kraftfahrzeugs darstellenden Parameters mindestens eine zusätzliche Messgröße aus der folgenden Gruppe verwendet wird: Motordrehzahl, Drosselklappen- bzw. Gaspedalstellung, Fahrzeuggeschwindigkeit, Saugrohrunterdruck, Kühlmitteltemperatur, Zündzeitpunkt, Einspritzmenge, Lambda-Wert, Abgasrückführrate und Abgastemperatur.

7. Verfahren nach einem der Ansprüche 1 bis 6, wobei aus dem Summensignal (12) die Schwingungsamplitude bei charakteristischen Ruckelfrequenzen abgeleitet wird.

8. Vorrichtung zur Analyse des Fahrverhaltens von Kraftfahrzeugen auf einem Rollenprüfstand, mit einem ersten Sensor (1) zur Erfassung eines Drehzahl-Signals vom Antriebsstrang des Kraftfahrzeugs oder vom Rollenprüfstand, mit einem Beschleunigungssensor (5) zur Erfassung der Längsbeschleunigung des Kraftfahrzeugs und mit einer Auswertungseinrichtung, die mit dem ersten Sensor und mit dem Beschleunigungssensor verbunden ist und die dazu ausgebildet ist, die Signale der Sensoren weiterzuverarbeiten und zu einem Summensignal (12) zu überlagern, um aus dem Summensignal (12) einen die Fahrbarkeit des Kraftfahrzeugs darstellenden Parameter zu berechnen.

9. Vorrichtung nach Anspruch 8, wobei der Beschleunigungssensor (5) im Bereich einer Nackenstütze des Kraftfahrzeugs angebracht ist.

10. Vorrichtung nach einem der Ansprüche 8 oder 9, wobei die Auswertungseinrichtung einen Differenziator und einen Tiefpass-Filter (3) für das erste Längsbeschleunigungs-Signal (10) und/oder einen Hochpass-Filter (6) für das zweite Längsbeschleunigungs-Signal (11) aufweist.

## Claims

1. A method for analyzing the driving behavior of motor vehicles on a roller type test stand, with the following steps:
- performance of a predetermined operating cycle in a motor vehicle which is disposed on a roller type test stand;
- determination of a first longitudinal acceleration signal (10) from a speed signal which is tapped from the power train of the motor vehicle or the roller type test stand;
- determination of a second longitudinal acceleration signal (11) by an acceleration sensor (5) attached to the motor vehicle;
- superposition of the first and second longitudinal acceleration signal (10, 11) into a composite signal (12);
- determination of a parameter representative of the driveability of the motor vehicle from the composite signal (12).

2. A method according to claim 1, wherein the first longitudinal acceleration signal (10) is derived from a speed signal by differentiation.

3. A method according to one of the claims 1 or 2, wherein the first longitudinal acceleration signal (10) is subjected to a low-pass filtering.

4. A method according to one of the claims 1 to 3, wherein the second longitudinal acceleration signal (11) is subjected to a high-pass filtering.

5. A method according to one of the claims 3 or 4, wherein in the formation of the composite signal (12) the group delay times are corrected in the high-pass filter (6) and/or in the low-pass filter (3).

6. A method according to one of the claims 1 to 5, wherein in addition to the composite signal (12) at least one additional measured variable is used from the following group for the determination of a parameter representative of the driveability of the motor vehicle: engine speed, position of throttle valve or gas pedal, vehicle speed, suction pipe vacuum, coolant temperature, ignition point, injection quantity, lambda value, exhaust gas recirculation value and exhaust gas temperature.

7. A method according to one of the claims 1 to 6, wherein the oscillation amplitude is derived from the composite signal (12) at characteristic surge frequencies.

8. An apparatus for the analysis of the driving behavior of motor vehicles on a roller type test stand, with a first sensor (1) for detecting a speed signal from the power train of the motor vehicle or the roller type test stand, with an acceleration sensor (5) for detecting the longitudinal acceleration of the motor vehicle, and with an evaluation device which is connected with the first sensor and with the acceleration sensor and which is arranged so as to further process the signals of the sensors and superimpose the same into a composite signal (12) in order to calculate from said composite signal (12) a parameter representative of the driveability of the motor vehicle.

9. An apparatus according to claim 8, wherein the acceleration sensor (5) is attached in the zone of a neck-rest of the motor vehicle.

10. An apparatus according to one of the claims 8 or 9, wherein the evaluation device comprises a differentiator and a low-pass filter (3) for the first longitudinal acceleration signal (10) and/or a high-pass filter (6) for the second longitudinal acceleration signal (11).

## Revendications

1. Procédé d'analyse du comportement routier de véhicules automobiles sur un banc d'essai comprenant les opérations suivantes :
- on exécute un cycle de fonctionnement prédéfini sur un véhicule installé sur un banc d'essai à rouleaux,
- on détermine un premier signal d'accélération longitudinale (10) à partir d'un signal de vitesse de rotation prélevé sur la ligne de transmission du véhicule ou du banc d'essai à rouleaux,
- on détermine un second signal d'accélération longitudinale (11) par un capteur d'accélération (5) fixé au véhicule,
- on combine le premier et le second signal d'accélération longitudinale (10, 11) pour former un signal de somme (12),
- à partir du signal-somme (12) on détermine un paramètre représentant l'aptitude au roulage du véhicule.

2. Procédé selon la revendication 1,
selon lequel
on déduit le premier signal d'accélération longitudinale (10) d'un signal de vitesse de rotation en procédant par différentiation.

3. Procédé selon l'une des revendications 1 ou 2,
selon lequel
on soumet le premier signal d'accélération longitudinale (10) à un filtrage passe-bas.

4. Procédé selon l'une des revendications 1 à 3,
selon lequel
on soumet le second signal d'accélération longitudinale (11) à un filtrage passe-haut.

5. Procédé selon l'une des revendications 3 ou 4,
selon lequel
en formant le signal-somme (12) on corrige les temps de parcours de groupes dans le filtre passe-haut (6) et/ou dans le filtre passe-bas (3).

6. Procédé selon l'une des revendications 1 à 5,
selon lequel
en plus du signal-somme (12) pour déterminer un paramètre représentant l'aptitude au roulage du véhicule, on utilise au moins une grandeur de mesure supplémentaire choisie dans le groupe comprenant :
le régime moteur,
la position du volet d'étranglement ou de la pédale d'accélérateur, la vitesse du véhicule, la dépression dans la conduite d'admission, la température du liquide de refroidissement, le point d'allumage, la quantité injectée, le coefficient lambda, le taux de réintroduction des gaz d'échappement et la température des gaz d'échappement.

7. Procédé selon l'une des revendications 1 à 6,
dans lequel
on déduit l'amplitude d'oscillation pour des fréquences de secousses caractéristiques à partir du signal-somme (12).

8. Dispositif d'analyse du comportement routier de véhicules sur un banc d'essai à rouleaux comprenant un premier capteur (1) pour saisir un signal de vitesse de rotation de la ligne d'entraînement du véhicule ou du banc d'essai à rouleaux, un capteur d'accélération (5) pour détecter l'accélération longitudinale du véhicule et une installation d'exploitation reliée à un premier capteur et au capteur d'accélération et permettant de traiter les signaux des capteurs et de les combiner à un signal-somme (12) pour calculer un paramètre représentant l'aptitude au roulage du véhicule à partir du signal-somme (12).

9. Dispositif selon la revendication 8,
selon lequel
on loge le capteur d'accélération (5) au niveau d'un appui-tête du véhicule.

10. Dispositif selon l'une des revendications 8 ou 9,
selon lequel
l'installation d'exploitation comprend un différentiateur et un filtre passe-bas (3) pour le premier signal d'accélération longitudinale (10) et/ou un filtre passe-haut (6) pour le second signal d'accélération longitudinale (11).
